**Europäisches Patentamt**

**European Patent Office**

**Office européen des brevets**

(19)

(11) Veröffentlichungsnummer: **0 234 177 B1**

# EUROPÄISCHE PATENTSCHRIFT

(12)

(45) Veröffentlichungstag der Patentschrift:
08.08.90

(51) Int. Cl.⁵: **H04L 27/14**

(21) Anmeldenummer: **86810607.1**

(22) Anmeldetag: **19.12.86**

(54) Verfahren und Vorrichtung zum Demodulieren von FSK-Signalen.

(30) Priorität: **23.12.85 CH 5486/85**

(43) Veröffentlichungstag der Anmeldung:
**02.09.87 Patentblatt 87/36**

(45) Bekanntmachung des Hinweises auf die Patenterteilung:
**08.08.90 Patentblatt 90/32**

(84) Benannte Vertragsstaaten:
**AT CH DE FR GB LI SE**

(56) Entgegenhaltungen:
EP-A- 0 162 198
US-A- 4 156 194
US-A- 4 479 092

ERICSSON TECHNICS, Band 24, Nr. 1, 1968,
Seiten 31-41, Stockholm, SE; L.H. ZETTERBERG:
"Decision-adaptive FSK receivers"
IEEE TRANSACTIONS ON COMMUNICATIONS, Band 23,
Nr. 5, Mai 1975, Seiten 543-546, New York, US; C.J.
WAYLAN: "Detection of fast, noncoherent,
frequency-hopped FSK"
ELECTRONICS AND COMMUNICATIONS IN JAPAN,
Band 68, Nr. 1, Teil 1, Januar 1985, Seiten 100-108,
Scripta Technica, Inc., Silver Spring, Maryland, US; Y.
NAKAMURA et al.: "Discriminator with partial response
detection of NRZ-FSK signals"

(73) Patentinhaber: **Stiftung Hasler Werke, Belpstrasse 23,
CH-3000 Bern 14(CH)**

(72) Erfinder: **Shah, Arvind, Beauregard, 55,
CH-2036 Cormondrèche(CH)**
Erfinder: **Rao, Sathyanarayana, Oree 38,
CH-2000 Neuchâtel(CH)**
Erfinder: **Kapetanovic, Amir, Donnerbühlweg 3,
CH-3012 Bern(CH)**

(74) Vertreter: **Schwerdtel, Eberhard, Dr., Ascom Tech AG
Abteilung KTMR Belpstrasse 23 Postfach,
CH-3000 Bern 14(CH)**

(56) Entgegenhaltungen: (Fortsetzung)

ELECTRONICS LETTERS, Band 22, Nr. 12, 5. Juni 1986,
Seiten 658,659, Stevenage, Herts, GB; A.V. SHAH et al.:
"Pseudocoherent FSK demodulation"

**Beschreibung**

Die Erfindung betrifft ein Verfahren und eine Vorrichtung zum Demodulieren von FSK-Signalen entsprechend den Oberbegriffen der unabhängigen Ansprüche.

Es sind verschiedene Verfahren zur Demodulation von FSK-Signalen (Frequency Shift Keying, frequenz-umgetastete Signale) bekannt. Ein solches Verfahren, bei dem die Nulldurchgänge der FSK-Signale erfasst und unter Verwendung von speziellen Transversalfiltern weiter verarbeitet werden, ist beispielsweise durch die Europäische Patentschrift 0 066 229 beschrieben.

Andere Verfahren verwenden Korrelationsmethoden. Hierzu wird auf den Artikel von A.C.M. Claasen und J.B.H. Peek: "A Digital Receiver for Tone Detection Applications" in IEEE Transactions on Communications, VOL. COM-24, NO. 12, Dec. 1976, Seiten 1291 bis 1300 verwiesen. In diesem Artikel werden zwei rein digital arbeitende Schaltungen angegeben. Diese dienen zum Korrelieren von digitalisierten, frequenzcodierten Signalen mit orthogonalen Funktionen der in den genannten Signalen verwendeten Frequenzen, zum Integrieren der Korrelationssignale jeweils über ein Intervall der Länge T eines Zeichens dieser Signale, zum Vergleich der jeweiligen Integralwerte und zur Entscheidung aus den Vergleichswerten, welches der möglichen Zeichen des genannten Signals jeweils vorliegt.

Verfahren zum Demodulieren von frequenzbestimmten Signalen, z.B. FSK-Signalen, unter Verwendung von Korrelationsmethoden geben im allgemeinen auch bei hoher Geräuschüberlagerung sichere Ergebnisse. Anders als bei Filtermethoden erfordern die bekannten Korrelationsmethoden jedoch die periodische Rückstellung der Korrelationsintegratoren, und zwar synchron mit den jeweiligen Signalen. Diese periodische Rückstellung ist für FSK-Signale aufwendig und erzeugt Fehler aufgrund ungenauen Timings. Es ist daher die Aufgabe der Erfindung, eine Methode anzugeben, wie das periodische Rückstellen der Korrelationsintegratoren beim Demodulieren von FSK-Signalen vermieden werden kann.

Diese Aufgabe wird gelöst entsprechend den kennzeichnenden Teilen der unabhängigen Ansprüche. Die abhängigen Ansprüche geben Ausgestaltungen der Erfindung an.

Das erfindungsgemässe Verfahren führt ein "gleitendes Fenster" (sliding window) für die Integration der Korrelationswerte ein, wodurch die notwendige Rückstellung der Integratoren gleitend, d.h. ständig während des Integrationsvorganges erfolgt. Das Verfahren arbeitet mit allen Vorteilen der bekannten Korrelationsmethoden. Insbesondere weist es deren gute Selektivität auf. Eine gewisse Instabilität beim Wechsel von einem logischen Signalwert (z.B. "0") des FSK-Signals zu einem anderen Signalwert (z.B. "1") wird durch eine zeitabhängige Überprüfung des Entscheidungssignals eliminiert. Damit liegt ein Demodulationsverfahren für FSK-Signale vor, das die Nachteile der bisherigen Korrelationsmethoden mit relativ geringem Aufwand überwindet. Im folgenden wird die Erfindung beispielsweise anhand von zwei Figuren näher beschrieben. Es zeigen:

Fig. 1 - Blockschaltbild einer Vorrichtung zum Demodulieren von FSK-Signalen
Fig. 2 - Zeitdiagramme hierzu.

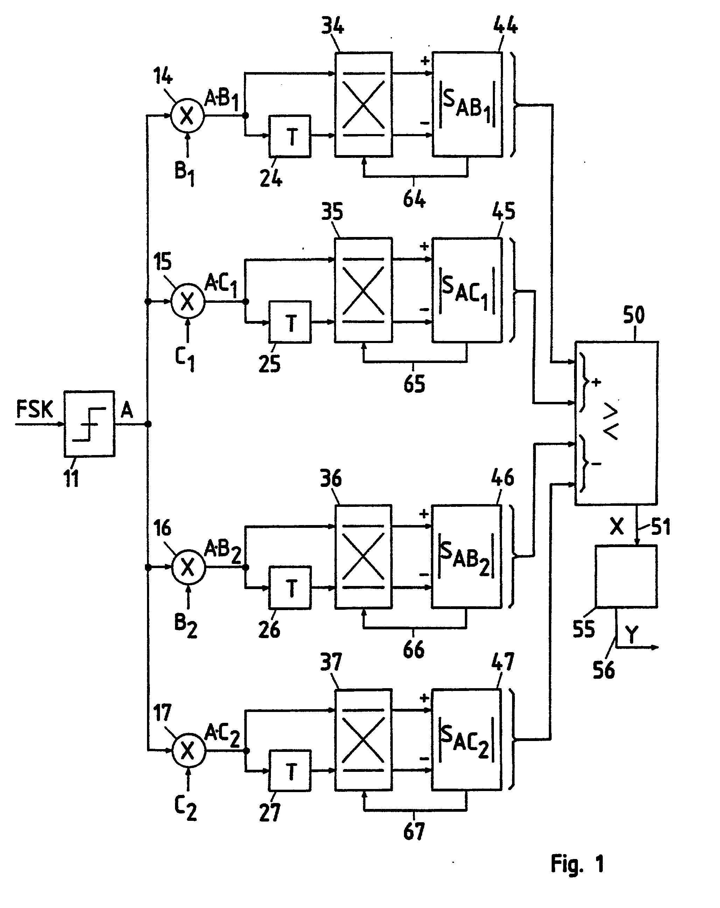

Fig. 1 zeigt das Blockschaltbild einer Vorrichtung zum Demodulieren eines zweiwertigen FSK-Signals. FSK-Signale bestehen ganz allgemein aus einem ununterbrochenen Signalzug mit unmittelbar aufeinanderfolgenden Bereichen gleichbleibender, vorgegebener Frequenzen $\omega_i$ (i = 1, 2, 3...). Jede der Frequenzen ist einem logischen Pegel bzw. einem Signalwert W zugeordnet und entspricht dem logischen Wert eines der zu übertragenden Informationselemente. Diese sind im zweiwertigen Fall z.B. die Bits 0 und 1, im vierwertigen Fall beispielsweise Spannungspegel 1, 2, 3, 4 oder Bitkombinationen, z.B. 00, 01, 10, 11. Jeder Signalwert W weist theoretisch eine konstante zeitliche Länge auf, die Elementlänge T.

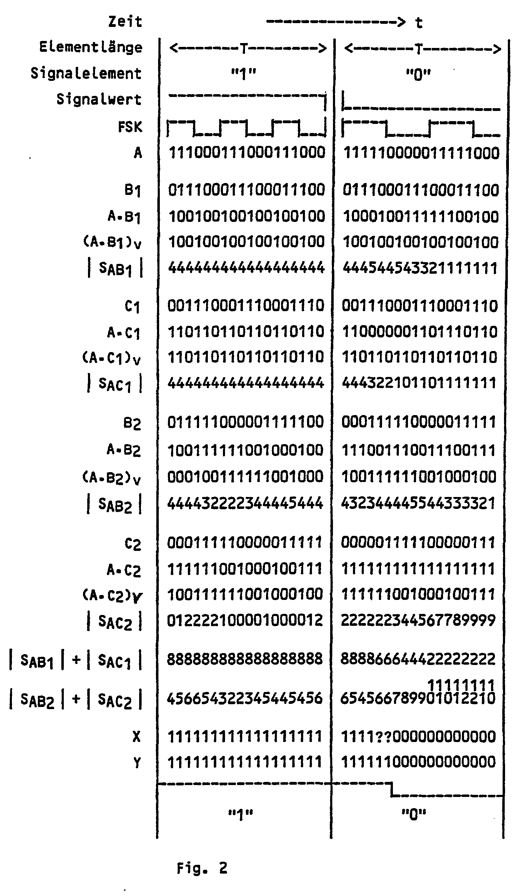

In den meisten praktischen Fällen besitzen die FSK-Signale nur zwei Signalwerte. Daher ist Fig. 1 auf diesen Fall beschränkt. Fig. 2 zeigt Zeitdiagramme zur Erläuterung der Arbeitsweise der Vorrichtung nach Fig. 1, wobei die Zeit t von links nach rechts läuft.

Das zu demodulierende (im gezeigten Fall zweiwertige) FSK-Signal erreicht die Vorrichtung über ein nicht gezeigtes Bandpassfilter und einen Digitalisierer 11, z.B. einen übersteuerten Verstärker oder einen Analog/Digital-Wandler. Der Digitalisierer 11 gibt an seinem Ausgang ein Empfangssignal A mit unterschiedlichen Empfangssignalelementen U1 und U2 ab, entsprechend den übertragenen Bits.

Die Empfangssignalelemente U1, U2 besitzen im Idealfall eine einheitliche Elementlänge T, aufgeteilt in eine ganzzahlige Zahl von Unterelementen mit abwechselndem, zweiwertigem Pegel, deren Taktfolgen den Frequenzen $\omega$1 bzw. $\omega$2 des FSK-Signals entsprechen (Zeile FSK in Fig. 2). Im praktischen Fall sind die Verhältnisse durch das nicht zu vermeidende Übertragungsgeräusch verschlechtert.

Die Unterelemente sind beispielsweise zeit- und pegelkontinuierlich, besitzen also sozusagen konstante "Spannung". Aus praktischen Gründen ist es jedoch günstiger, zeitabgetastete Signale zu verwenden. In diesem Fall besteht jedes Unterelement des Empfangssignals A aus einer Folge diskreter Abtastwerte w. Diese weisen einen von zwei möglichen Spannungswerten und konstanten zeitlichen Abstand auf, derart, dass der Wertlänge T z.B. 128 Abtastwerte w entsprechen. Im Zusammenhang mit den Fig. 1 und 2 wird im folgenden unter jeder zeitlichen Signalgrösse stets eine solche Folge von Abtastwerten w verstanden. In der Zeile A von Fig. 2 werden die Abtastwerte w durch die Ziffern (logisch) 0 und 1 dargestellt.

Das Empfangssignal A wird parallel vier Korrelatoren zugeführt. Diese umfassen analog zu bekannten Korrelatoren Multiplizierer 14, 15, 16, 17 und diesen nachgeschaltete Integratoren 44, 45, 46, 47. In den Multiplizierern wird das Empfangssignal A mit insgesamt vier verschiedenen Korrelierungssignalen $f(\omega_i t)$ der einen ($\omega_1$) und der anderen ($\omega_2$) vorgegebenen Frequenz multipliziert. Die Signale $f(\omega_i t)$ mit gleicher Frequenz sind jeweils zu einander orthogonal. Im speziellen heisst dies, dass der Multiplizierer 14 das Empfangssignal A mit $B_1 = f(\omega_1 t)$, der Multiplizierer 15 mit $C_1 = f'(\omega_1 t)$, der Multiplizierer 16 mit $B_2 = f(\omega_2 t)$ und der Multiplizierer 17 mit $C_2 = f'(\omega_2 t)$ multipliziert. Die Funktionen f und f' können dabei die Sinus- und Cosinusfunktion sein oder bevorzugt wiederum eine Abtastfolge eines digitalen Pendants dieser Funktionen, d.h. z.B. $B_i = \text{sign}(\sin(\omega_i t))$, und $C_i = \text{sign}(\cos\omega_i t)$, mit $i = 1$ und 2. Die Multiplikation ist bevorzugt eine logische Multiplikation, d.h. z.B. eine Modulo-2-Addition. Eine solche ist entsprechend nachstehender Tabelle

| a | b | a • b |
|---|---|-------|
| 0 | 0 | 0 |
| 1 | 0 | 1 |
| 0 | 1 | 1 |
| 1 | 1 | 0 |

schaltungsmässig einfach zu realisieren und entspricht einem Exklusiv-ODER-Tor (EXOR).

Jedes der bei der Multiplikation entstehenden Multiplikationssignale $A \cdot B_i$, $A \cdot C_i$, d.h. bei den angegebenen Spezialisierungen insbesondere Multiplikationswert-Folgen, wird dem jeweils zugeordneten Integrator 44 bis 47 zugeführt, und zwar jeweils zum einen direkt und zum anderen um eine Wertlänge T verzögert. Die Verzögerung erfolgt in den Verzögerungsgliedern 24 bis 27, die bevorzugt als Schieberegister ausgebildet sind, deren Länge der Anzahl Abtastwerte w pro Wertlänge T, d.h. w/T, entspricht. In Fig. 2 sind die verzögerten Multiplikationssignale mit dem Index v gekennzeichnet.

Die Integratoren 44 bis 47 sind bevorzugt als Vorwärts-/Rückwärtszähler ausgebildet mit einem Vorwärts- und einem Rückwärtszähleingang + bzw. -. Welches Multiplikationssignal, das unverzögerte oder das verzögerte, positiv und welches negativ gezählt wird, hängt von der jeweiligen Stellung von Umschaltgliedern 34 bis 37 ab, die den Zähleingängen + und - vorgeschaltet sind. Diese Umschaltglieder 34 bis 37 schalten jeweils um, sobald der Zählwert des jeweils zugeordneten Zählers 44 bis 47 den Wert Null erreicht. Dies ist durch die Steuerverbindungen 64 bis 67 angedeutet.

Die Zähler 44 bis 47 arbeiten nach folgender Tabelle:

| Eingang | | Zählwert S |
|---------|---|-----------|
| + | - | |
| 0 | 0 | unverändert |
| 1 | 0 | + 1 |
| 0 | 1 | - 1 |
| 1 | 1 | unverändert |

Dies bedeutet, dass bei ungleichen Multiplikationswerten an den Zähleingängen der jeweilige Zählwert S entweder um 1 erhöht oder erniedrigt wird. Bei gleichen Multiplikationswerten an den Zähleingängen bleibt der jeweilige Zählwert S dagegen unverändert.

Die Kombination der Umschaltglieder 34 bis 37 mit den zugeordneten Vorwärts-/Rückwärtszählern 44 bis 47 bewirkt die Akkumulierung der Multiplikationssignale $A \cdot B_i$, $A \cdot C_i$ zu Absolut-Zählwerten $|S_{AB_i}|$, $|S_{AC_i}|$.

Die Absolut-Zählwerte $|S_{AB_i}|$ und $|S_{AC_i}|$ werden paarweise zusammengefasst und die gepaarten Werte im Vergleicher 50 laufend bezüglich ihrer Gesamtbeträge bzw. Summen miteinander verglichen. Ist die jeweilige Differenz der Gesamtbeträge grösser als Null, so erscheint bei der gezeigten Art der Korrelatoren auf dem Ausgang 51 des Vergleichers 50 der eine Signalwert $x_1$ eines Entscheidungssignals X. Ist die Differenz der Gesamtbeträge dagegen kleiner oder gleich Null, also im anderen Fall, so erscheint der zweite Signalwert $x_2$ des Entscheidungssignals X. Das Entscheidungssignal X wird in einem Zeitüberwachungsglied 55 laufend auf die mittlere zeitliche Dauer $\tau_1$ und $\tau_2$ überprüft, für die es bei seinen Signalwerten $x_1$ bzw. $x_2$ verharrt.

Diese Überprüfung erfolgt so, dass kurzzeitige Wechsel vom einen Signalwert, z.B. $x_2$, zum anderen Signalwert $x_1$, unberücksichtigt bleiben für die Umschaltung des Signalwertes $y_i$ des Demodulationssignals Y, das am Ausgang 56 des Zeitüberwachungsgliedes 55 ausgegeben wird. Andererseits soll bei einem anhaltenden Wechsel des Signalwertes $x_i$ der entsprechende Signalwert $y_i$ des Demodulationssignals Y möglichst rasch umschalten und damit die Demodulation eines Bits bzw. des Signalelements des FSK-Signals anzeigen, dessen Signalwert W ("0" oder "1") abweicht vom Signalwert des vorhergehenden Signalelements.

Das Zeitüberwachungsglied 55 kann entweder als Tiefpassfilter ausgebildet sein, als digitaler Impulslängenmesser oder bevorzugt und in Anpassung an die gezeigte sonstige Vorrichtung als weiterer Vorwärts-/Rückwärtszähler mit Zählbegrenzung. Im letzteren Fall bewirkt jeder Signalwert $x_1$ ein Weiterschalten des Zählers 55 in der einen Richtung und jeder Signalwert $x_2$ ein Weiterschalten in der anderen Richtung, d.h. eine Veränderung des jeweiligen Zählwertes Z um 1 nach oben bzw. unten. Sobald der Zähler 55 seinen einen $Z_1$ oder anderen $Z_2$ Maximalzählwert erreicht, verlieren weitere Signalwerte $x_i$ für die entsprechende Zählrichtung ihre Wirkung und der Zählwert Z bleibt konstant auf dem Maximalzählwert $Z_1$ bzw. $Z_2$.

Der Vorwärts-/Rückwärts-Zähler 55 gibt an seinem Ausgang 56 das Demodulationssignal Y ab, dessen Signalwerte $y_1$ und $y_2$ jeweils angeben, ob das jeweilige Bit bzw. Signalelement des empfangenen FSK-Signals den Signalwert "1" oder "0" aufweist. Der Zustand des Demodulationssignals verharrt jeweils solange auf seinem Signalwert $y_1$ oder $y_2$, bis der jeweils andere Maximalzählwert $Z_1$ oder $Z_2$ des Zählers 55 erstmals wieder erreicht wird. Wird ein Maximalzählwert $Z_1$ oder $Z_2$ dagegen verlassen und anschliessend wieder erreicht, so hat dies keinen Einfluss auf den jeweiligen Signalwert $y_1$, $y_2$ des Demodulationssignals Y.

Die Anordnung nach Fig. 1 ermöglicht das Demodulieren eines zweiwertigen FSK-Signals mit einer von den herkömmlichen Korrelationsverfahren her bekannten, guten Entscheidungssicherheit. Durch das gleichzeitige, laufende Akkumulieren der Multiplikationssignale $A \cdot B_i$, $A \cdot C_i$, zum einen als unverzögerte und zum anderen als um eine Elementlänge T verzögerte Signale, entfällt die bisher notwendige, phasenrichtige Rückstellung der Vorwärts-/Rückwärtszähler 44 bis 47 im Takt T des FSK-Signals. Diese Rückstellung erfolgt neu durch die beschriebene Anordnung laufend durch die "Subtraktion" der verzögerten Signale, die um die Zeit T früher als unverzögerte Signale entsprechend "addiert" worden waren. Die bei dieser laufenden bzw. gleitenden Rückstellung bestehende Unsicherheit im Entscheidungssignal X wird durch die beschriebene Wirkung des Zeitüberwachungsgliedes 55 überwunden, so dass das Demodulationssignal Y mit sehr hoher Fehlersicherheit dem ausgesandten FSK-Signal entspricht.

Die Anordnung ist relativ einfach und rein digital aufbaubar. Sie eignet sich daher für die Integration als Halbleiterbaustein der LSI oder VLSI-Technik (large scale integration bzw. very large scale integration).

Die Anordnung findet als solcher LSI-Baustein beispielsweise Anwendung bei Empfängern, die an FSK Übertragungsstrecken angeschlossen sind, z.B. bei Fernschreibempfängern.

Die Anordnung lässt sich auf mancherlei Art variieren, ohne dass der wesentliche Erfindungsgedanke verlassen wird. Solche Variationen sind beispielsweise:
- Statt der Absolutwerte der Zählwerte $| S_{AB_i} |$, $| S_{AC_i} |$, werden sonstige vorzeichenunabhängige Werte, insbesondere die Quadratwerte der Zählbeträge gebildet;
- Die Integratoren der Korrelatoren werden nicht als Vorwärts-/Rückwärtszähler 44 bis 47 ausgebildet, sondern als addierende/subtrahierende Mikroprozessoren mit zugehörigen Speichern;
- Der Vorgang des Integrierens der Multiplikationssignale $A \cdot B_i$, $A \cdot C_i$ in den Integratoren der Korrelatoren ist ein Zählen, Akkumulieren, Addieren/Subtrahieren oder sonstiges Zusammensummieren.
- Die Verzögerungsglieder 24 bis 27 sind prozessorgesteuerte Verzögerungsspeicher, usw.

Insbesondere ist das Verfahren nicht, wie erwähnt, auf die Art des Empfangssignals A und auf zweiwertige FSK-Signale beschränkt. Das Empfangssignal kann vielmehr zeitdiskret oder eine Folge von Abtastwerten W sein. Bei zweiwertigen solchen Signalen sind die zugehörigen Signalwerte z.B. zwei verschiedene Spannungen, bei mehrwertigen solchen Signalen entweder eine entsprechende Anzahl verschiedener Spannungswerte oder logische Kombinationen von zwei oder mehr zusammengehörigen zweiwertigen Signalen.

Die Erweiterbarkeit des Demodulationsverfahrens von zweiwertigen auf mehrwertige FSK-Signale ist in der ganzen Beschreibung durch die Indices i angedeutet, wobei i eine natürliche Zahl bedeutet (i = 1, 2, 3...). Bei beispielsweise einem vierwertigen FSK-Signal wären zur Anordnung entsprechend Fig. 1 vier weitere Korrelatoren parallel zu den gezeigten hinzuzufügen. Der Vergleicher 50 hätte dauernd zu überwachen, welcher Gesamtbetrag der absoluten Zählwerte $| S_{AB_1} | + | S_{AC_1} |$ ; $| S_{AB_2} | + | S_{AC_2} |$ ; $| S_{AB_3} | + | S_{AC_3} |$ ; $| S_{AB_4} | + | S_{AC_4} |$ jeweils der grösste ist. Und das Zeitüberwachungsglied 55 wäre so auszubilden, dass der jeweilige Signalwert $y_i$ des Demodulationssignals Y jeweils solange beibehalten wird, solange die mittlere Verharrungsdauer $\tau_i$ des dem genannten Signalwert $y_i$ zugeordneten Signalwertes $x_i$ des Entscheidungssignals X grösser ist als die im gleichen Zeitraum t gemittelten mittleren Verharrungsdauern $\tau_j$ aller anderen Signalwerte $x_j$ ($j \neq i$) des Entscheidungssignals X, und dass der jeweilige Signalwert $y_i$ des Demodulationssignals Y von $y_i$ auf $y_j$ geändert wird, sobald die mittlere Verharrungsdauer $\tau_j$ eines der anderen Signalwerte $x_j$ ($j \neq i$) des Entscheidungssignals X grösser wird als die im gleichen Zeitraum t gemittelte mittlere Verharrungsdauer desjenigen Signalwertes $x_i$, der dem jeweiligen bisherigen Signalwert zugeordnet war, wobei die Änderung in denjenigen Zustand $y_i$ des Demodulationssignals Y erfolgt, der dem jeweiligen einen der anderen Zustände $x_j$ des Entscheidungssignals X entspricht.

**Patentansprüche**

1. Verfahren zum Demodulieren eines FSK-Signals mit Signalelementen (Bit) konstanter Elementlänge (T) und jeweils einer von mehreren vorgegebenen Frequenzen ($\omega_i$) nach der Korrelationsmethode, wobei zur Korrelation das gefilterte und digitalisierte Empfangssignal (A) paarweise mit periodischen, orthogonalen Korrelationssignalen ($B_i$, $C_i$) der vorgegebenen Frequenzen ($\omega_i$) multipliziert, die Multiplikationssignale ($A \cdot B_i$, $A \cdot C_i$) integriert, vorzeichenunabhängigen Integrationswerte ($| S_{AB_i} |$, $| S_{AC_i} |$) gebildet, diese Werte paarweise zusammengefasst und die Summen dieser Werte zur Bildung des abzugebenden Demodulationssignals (Y) miteinander verglichen werden, dadurch gekennzeichnet,
- dass jedes Multiplikationssignal ($A \cdot B_i$, $A \cdot C_i$) laufend zum einen unverzögert und zum anderen mit umgekehrtem Vorzeichen um eine Elementlänge (T) verzögert einem zugeordneten Integrator (44 bis 47) zugeführt wird,

- dass laufend ein Entscheidungssignal (X) abgegeben wird, dessen jeweiliger Signalwert $(x_i)$ der jeweils grössten der Summen zugeordnet ist,

- dass der jeweilige Signalwert $(y_i)$ des Demodulationssignals (Y) jeweils solange beibehalten wird, solange die mittlere Verharrungsdauer $(\tau_i)$ des dem genannten Signalwert $(y_i)$ zugeordneten Signalwertes $(x_i)$ des Entscheidungssignals (X) grösser ist als die im gleichen Zeitraum (t) gemittelten mittleren Verharrungsdauern $(\tau_j)$ aller anderen Signalwerte $(x_j)$ des Entscheidungssignals (X),

- dass der jeweilige Signalwert $(y_i)$ des Demodulationssignals (Y) geändert wird, sobald die mittlere Verharrungsdauer $(\tau_j)$ eines der anderen Signalwerte $(x_j)$ des Entscheidungssignals (X) grösser wird als die im gleichen Zeitraum (t) gemittelte mittlere Verharrungsdauer $(\tau_i)$ desjenigen Signalwertes $(x_i)$ des Entscheidungssignals (X), der dem jeweiligen bisherigen Signalwert $(y_i)$ des Demodulationssignals (Y) zugeordnet war,

- und dass der neue Signalwert $(y_j)$ des Demodulationssignals (Y) derjenige ist, der dem jeweiligen einen der anderen Signalwerte $(x_j)$ des Entscheidungssignals (X) entspricht, (i = 1, 2, 3....; j = 1, 2, 3...; j ≠ i).

2. Verfahren nach Anspruch 1, dadurch gekennzeichnet,

- dass die Signale und sonstigen Grössen zeitgetastete Signale bzw. zeitgetastete Grössen sind.

3. Verfahren nach Anspruch 1 und 2, dadurch gekennzeichnet,

- dass die vorzeichenunabhängigen Integrationswerte ( $| S_{AB_i} |$ , $| S_{AC_i} |$ ) in den Integratoren (44 bis 47) gebildet werden, indem bei gleichen Multiplikationssignalen ($A \cdot B_i = A \cdot C_i = 00$ oder 11) an den beiden Eingängen (+, -) des jeweiligen Integrators (44 bis 47) der jeweilige Zählwert unverändert bleibt und dass bei ungleichen Multiplikationssignalen ($A \cdot B_i \neq A \cdot C_i$) im einen Fall (10) der jeweilige Zählwert um eins erhöht und im anderen Fall (01) um eins erniedrigt wird, und

- dass beim Erreichen des Zählwertes Null jeweils die Zählrichtungen gewechselt werden.

4. Verfahren nach Anspruch 1, dadurch gekennzeichnet, dass die Signalwerte $(y_i)$ des Demodulationssignals (Y) durch begrenztes Vorwärts- und Rückwärtszählen der zugeordneten Signalwerte $(x_i)$ des Entscheidungssignals (X) so gebildet werden, dass beim jeweils erstmaligen Erreichen eines Maximalzählwertes $(Z_i)$ der Signalwert $(y_i)$ wechselt, jedoch nicht bei einem direkten nochmaligen Erreichen des jeweils selben Maximalzählwertes $(Z_i)$.

5. Vorrichtung zur Ausführung des Verfahrens nach den Ansprüchen 1 und 2, umfassend einen Digitalisierer (11), wenigstens zwei Paare von Korrelatoren mit Multiplizierern (14 bis 17) und Integratoren (44 bis 47) sowie einen Vergleicher (50), gekennzeichnet,

- durch Verzögerungsglieder (24 bis 27) zum Verzögern der Multiplikationssignale ( $A \cdot B_i$ , $A \cdot C_i$ ) um jeweils eine Elementlänge (T), die den Multiplizierern (14 bis 17) nachgeschaltet sind,

- durch Mittel zur Bildung vorzeichenunabhängiger Integrationswerte in den Integratoren (44 bis 47), die den Integratoren (44 bis 47) zugeordnet sind, und

- durch ein Zeitüberwachungsglied (55) zwischen dem Vergleicher (50) und dem Ausgang (56) der Vorrichtung.

6. Vorrichtung nach Anspruch 5, dadurch gekennzeichnet,

- dass die Integratoren (44 bis 47) Vorwärts-/Rückwärtszähler sind,

- dass die Verzögerungsglieder (24 bis 27) Schieberegister sind, deren Stellenzahl der Anzahl Abtastwerte während einer Elementlänge (T) entspricht,

- dass die Mittel zur Bildung vorzeichenunabhängiger Integrationswerte Umschaltglieder (34 bis 37) sind, die zwischen den Ein- und Ausgängen der Verzögerungsglieder (24 bis 27) und den Eingängen (+, -) der Integratoren (44 bis 47) angeordnet sind, und die, gesteuert durch die Integratoren (44 bis 47), die Eingänge (+, -) der Integratoren (44 bis 47) wechselweise mit den Ein- und Ausgängen der Verzögerungsglieder (24 bis 27) verbinden, und - dass das Zeitüberwachungsglied (55) ein in seinem Zählvolumen beschränkter Vorwärts-/Rückwärtszähler ist.

## Claims

1. Method for demodulating a FSK signal with signal elements (bits) of constant element length (T) and in each case one of several predetermined frequencies $(\omega_i)$ according to the correlation method, in which for correlating the filtered, digitized incoming signal (A) is multiplied pairwise with periodic, orthogonal correlation signals $(B_i, C_i)$ of the predetermined frequencies $(\omega_i)$, the multiplication signals $(A \cdot B_i, A \cdot C_i)$ are integrated, sign-independent integration values ( $| S_{AB_i} |$ , $| S_{AC_i} |$ ), these values are combined pairwise and the sums of these values are compared with one another for forming the demodulation signal (Y) to be emitted, characterized in that each multiplication signal $(A \cdot B_i, A \cdot C_i)$ is continuously supplied on the one hand in undelayed form and on the other with the reverse sign delayed by one element length (T) to an associated integrator (44 to 47), that continuously a decision signal (X) is emitted, whose signal value $(x_i)$ is associated with the largest of the sums, that the particular signal value $(y_i)$ of the demodulation signal (Y) is in each case retained for as long as the mean standing time $(r_i)$ of the signal value $(x_i)$ of the decision signal (X) associated with said signal value $(y_i)$ is higher than the mean standing times $(r_j)$ of all the other signal values $(x_j)$ of the decision signal (X) averaged during the same time period (t), that the signal value $(y_i)$ of the demodulation signal (Y) is modified, as soon as the average standing time $(r_j)$ of one of the

other signal values ($x_j$) of the decision signal (X) is higher than the mean standing time ($r_i$), averaged in the same time period (t), of the signal value ($x_i$) of the decision signal (X), which was associated with the previous signal ($y_i$) of the demodulation signal (Y) and the new signal value ($y_j$) of the demodulation signal (Y) is that corresponding to one of the other signal values ($x_j$) of the decision signal (X) (i = 1, 2, 3...; j = 1, 2, 3...; j ≠ i).

2. Method according to claim 1, characterized in that the signals and other quantities are time-scanned signals or quantities.

3. Method according to claims 1 and 2, characterized in that the sign-independent integration values ( | $S_{ABi}$ | , | $S_{ACi}$ | ) are formed in the integrators (44 to 47), in that with the same multiplication signal (A • $B_i$ = A • $C_i$ = 00 or 11) at the two (+/−) inputs of the integrator (44 to 47) the count number remains unchanged and that in the case of unequal multiplication signals (A • $B_i$ ≠ A • $C_i$) in one case (10) the count number is increased by one and in the other case (01) is decreased by one and that on reaching the count number zero the counting directions are changed.

4. Method according to claim 1, characterized in that the signal values ($y_i$) of the demodulation signal (Y) are so formed by limited up/down counting of the associated signal values ($x_i$) of the decision signal (X), that on first reaching a maximum count number ($Z_i$) the signal value ($y_i$) changes, but not on again directly reaching the same maximum count number ($Z_i$).

5. Device for performing the method according to claims 1 and 2 comprising a digitizer (11), at least two pairs of correlators with multipliers (14 to 17) and integrators (44 to 47), as well as a comparator (50), characterized by delay elements (24 to 27) for delaying the multiplication signals (A • $B_i$, A • $C_i$) by in each case one element length (T) and which are connected downstream of the multipliers (14 to 17), by means for forming sign-independent integration values in the integrators (44 to 47) associated with the latter and by a time monitoring member (55) between the comparator (50) and the output (56) of the device.

6. Device according to claim 5, characterized in that the integrators (44 to 47) are up/down counters, that the delay members (24 to 27) are shift registers, whose number of places corresponds to the number of scan values during an element length (T), that the means for forming sign-independent integration values are switching members (34 to 37), which are located between the inputs and outputs of the delay members (24 to 27) and the +/− inputs of the integrators (44 to 47) and which, controlled by the integrators (44 to 47), alternately connect the +/− inputs of integrators (44 to 47) to the inputs and outputs of the delay members (24 to 27) and that the time monitoring member (55) is a count volume-limited up/down counter.

## Revendications

1. Procédé pour démoduler selon la méthode de corrélation un signal FSK avec les éléments de signal (chiffre binaire) et ayant respectivement l'une de plusieurs fréquences prédéfinies ($\omega_i$), tandis que pour la corrélation, le signal de réception filtré et mis sous forme numérique (A) est multiplié par paires par des signaux de corrélation orthogonaux périodiques ($B_i$, $C_i$) des fréquences prédéfinies ($\omega_i$), les signaux de multiplication (A • $B_i$, A • $C_i$) étant intégrés, et des valeurs d'intégration, indépendantes du signe ( | $S_{ABi}$ | , | $S_{ACi}$ | ) étant formées, ces valeurs étant rassemblées par paires et les sommes de ces valeurs étant comparées entre elles pour former le signal de démodulation (Y) à délivrer, procédé caractérisé en ce que:

- chaque signal de multiplication (A • $B_i$, A • $C_i$), est appliqué couramment, l'un sans temporisation et l'autre avec une temporisation d'une longueur élémentaire (T) et inversion de signes, à un intégrateur correspondant (44 à 47),
- un signal de décision (X) est délivré de façon courante, la valeur respective de ce signal ($x_i$) étant associée respectivement à la plus grande des sommes,
- la valeur respective ($y_i$) du signal de démodulation (Y) est respectivement maintenue tant que la durée moyenne de maintien ($\tau_i$) de la valeur ($x_i$) du signal de décision (X) associée à la valeur de signal ($y_i$) associée est supérieure à la durée moyenne de maintien ($\tau_j$), déterminée dans le même intervalle de temps (t), de toutes les autres valeurs ($x_j$) du signal de décision (X),
- la valeur respective ($y_i$) du signal de démodulation (Y) est modifiée dès que la durée moyenne de maintien ($\tau_j$) de l'une des autres valeurs ($x_j$) du signal de décision (X) est supérieure à la durée moyenne de maintien ($\tau_i$), déterminée dans la même période de temps (t), qui était associée à la valeur respective jusque là existante ($y_i$) du signal de démodulation (Y),
- la nouvelle valeur ($y_j$) du signal de démodulation (Y) est celle qui correspond respectivement à une des autres valeurs ($x_j$) du signal de décision (X), (i = 1, 2, 3 ...; j = 1, 2, 3 ...; j étant différent de i).

2. Procédé selon la revendication 1, caractérisé en ce que les signaux et d'autres grandeurs sont des signaux explorés dans le temps ou bien des grandeurs explorées dans le temps.

3. Procédé selon la revendication 1 et la revendication 2, caractérisé en ce que:

- les valeurs d'intégration indépendantes du signe ( | $S_{ABi}$ | , | $S_{ACi}$ | ) sont formées dans les intégrateurs (44 à 47) en ce que, dans le cas de signaux de multiplication identiques (A • $B_i$ = A • $C_i$ = 00 ou 11) aux deux entrées (+, −) de l'intégrateur considéré (44 à 47), la valeur de comptage considérée demeure inchangée, tandis que dans le cas de signaux de multiplication inégaux (A • $B_i$ ≠ A • $C_i$), dans un cas (10), la valeur de comptage considérée est augmentée de un, tandis que dans l'autre cas (01), elle est abaissée de un.
— Lorsque la valeur de comptage zéro est atteinte, les sens de comptage sont respectivement inversés.

4. Procédé selon la revendication 1, caractérisé en ce que les valeurs ($y_i$) du signal de démodulation (Y) sont formées par des comptages limités en avant et en arrière des valeurs associées ($x_i$) du signal de décision (X) de façon que la valeur de signal ($y_i$) change lorsqu'une valeur de comptage maximale ($Z_i$) est atteinte pour la première fois, mais ne change pas lorsque cette même valeur de comptage maximale ($Z_i$) est atteinte directement encore d'autres fois.

5. Dispositif pour la mise en œuvre du procédé selon les revendications 1 et 2, dispositif comprenant un moyen de mise en forme numérique (11), au moins deux paires de corrélateurs avec des multiplicateurs (14 à 17) et des intégrateurs (44 à 47) ainsi qu'un comparateur (50), dispositif caractérisé en ce qu'il comporte:
— des organes de temporisation (24 à 27) pour retarder les signaux de multiplication ($A \cdot B_i$, $A \cdot C_i$) de respectivement une longueur élémentaire (T), ces organes étant branchés à la suite des multiplicateurs (14 à 17)
— des moyens pour former des valeurs d'intégration indépendantes du signe dans les intégrateurs (44 à 47), ces moyens étant associés aux intégrateurs (44 à 47),
— un organe de surveillance dans le temps (55) entre le comparateur (50) et la sortie (56) du dispositif.

6. Dispositif selon la revendication 5, caractérisé en ce que:
— les intégrateurs (44 à 47) sont des compteurs en avant/en arrière,
— les organes de temporisation (24 à 27) sont des registres à décalage dont le nombre de places correspond au nombre de valeurs d'exploration pendant une longueur élémentaire (T),
— les moyens pour la formation de valeurs d'intégration indépendantes du signe sont des organes de commutation (34 à 37), qui sont disposés entre les entrées et les sorties des organes de temporisation (24 à 27) et les entrées (+, −) des intégrateurs (44 à 47), et ces moyens, commandés par les intégrateurs (44 à 47), relient alternativement les entrées (+, −) des intégrateurs (44 à 47) avec les entrées et les sorties des organes de temporisation (24 à 27),
— l'organe de surveillance dans le temps (55) est un compteur en avant/en arrière dont le volume de comptage est limité.

Fig. 1

| | "1" | "0" |
|---|---|---|
| Zeit | ----------> t | |
| Elementlänge | <--------T--------> | <--------T--------> |
| Signalelement | "1" | "0" |
| Signalwert | | |
| FSK | | |
| A | 1110001110001111000 | 1111110000011111000 |
| B1 | 0111000111000111000 | 0111000111000111000 |
| A·B1 | 1001001001001001000 | 1000100111111100100 |
| (A·B1)v | 1001001001001001000 | 1001001001001001000 |
| \|SAB1\| | 4444444444444444444 | 4445445433211111111 |
| C1 | 0011100011100011100 | 0011100011100011100 |
| A·C1 | 1101101101101101100 | 1100000011011101100 |
| (A·C1)v | 1101101101101101100 | 1101101101101101100 |
| \|SAC1\| | 4444444444444444444 | 4443221011011111111 |
| B2 | 0111110000011111000 | 0001111100000111110 |
| A·B2 | 1001111110010001000 | 1110011100111001110 |
| (A·B2)v | 0001001111110010000 | 1001111110010001000 |
| \|SAB2\| | 4444322223444454444 | 4323444455443333211 |
| C2 | 0001111100000111111 | 0000011111000000111 |
| A·C2 | 1111110010001001110 | 1111111111111111111 |
| (A·C2)v | 1001111110010001000 | 1111110010001001110 |
| \|SAC2\| | 0122221000010000123 | 2222223445677899999 |
| \|SAB1\| + \|SAC1\| | 8888888888888888888 | 8888666444422222222 |
| \|SAB2\| + \|SAC2\| | 4566543223454454560 | 65456678990101221011111111 |
| X | 1111111111111111111 | 1111??000000000000 |
| Y | 1111111111111111111 | 1111110000000000000 |
| | "1" | "0" |

Fig. 2